# EUROPÄISCHE PATENTSCHRIFT

(11) **EP 4 260 005 B1**
(45) Veröffentlichungstag und Bekanntmachung des Hinweises auf die Patenterteilung: **02.07.2025**
(21) Anmeldenummer: 21839382.5
(22) Anmeldetag: 13.12.2021
(51) Int. Cl.: G01B 11/06, B21B 38/04

(54) **VORRICHTUNG UND VERFAHREN ZUR ABSTANDSMESSUNG**
APPARATUS AND METHOD FOR DISTANCE MEASUREMENT
DISPOSITIF ET PROCÉDÉ DE MESURE DE DISTANCE

(30) Priorität: 14.12.2020 DE 102020133404
(43) Veröffentlichungstag der Anmeldung: 18.10.2023
(73) Patentinhaber: Nokra Optische Prüftechnik und Automation GmbH, 52499 Baesweiler (DE)
(72) Erfinder: HELLMANN, Christian, 52146 Würselen (DE)
(74) Vertreter: Schwenderling, Jens
(86) Internationale Anmeldenummer: PCT/EP2021/085422
(87) Internationale Veröffentlichungsnummer: WO 2022/128879

(56) Entgegenhaltungen:
- EP-A1- 0 486 713
- DE-A1- 10 060 144
- DE-A1- 102013 017 289

## Beschreibung

Die Erfindung betrifft eine Vorrichtung und ein Verfahren zur Abstandsmessung, insbesondere zur Messung der Dicke eines Bandmaterials.

Materialien wie Stahl werden oft als Bandmaterial hergestellt und zu Rollen gewickelt. Dabei ist es wünschenswert, die genaue Dicke des Bandmaterials zu kennen und beim Herstellungsprozess zu überwachen. Es ist dazu bekannt, die Dicke von Bandmaterial mit zwei Abstandssensoren zu messen, die auf den beiden gegenüberliegenden Seiten des Bandmaterials angeordnet sind. Die Dicke des Bandmaterials kann dabei durch Subtraktion der beiden gemessenen Abstände vom Abstand zwischen den beiden Abstandssensoren ermittelt werden. Aus dem Stand der Technik ist es dazu bekannt, die Abstandssensoren einander gegenüberliegend anzuordnen. Derartige angeordnete Abstandssensoren sind aus der europäischen Patentanmeldung EP 0 486 713 A1 bekannt. Damit können zwar auch ausgedehnte Bandmaterialien vermessen werden. Allerdings besteht das Problem, dass sich die beiden Abstandssensoren relativ zueinander bewegen, beispielsweise durch Schwingungen und/oder durch thermische Verformung der Konstruktion, an der die Abstandssensoren befestigt sind. Eine derartige Relativbewegung führt dazu, dass sich der Abstand zwischen den beiden Abstandssensoren verändert. Dadurch ist die Genauigkeit der Bestimmung der Dicke des Bandmaterials begrenzt.

Aufgabe der vorliegenden Erfindung ist es, ausgehend vom beschriebenen Stand der Technik eine Vorrichtung und ein Verfahren vorzustellen, mit denen besonders genaue Abstandsmessungen möglich sind.

Diese Aufgaben werden gelöst mit der Vorrichtung und dem Verfahren gemäß den unabhängigen Ansprüchen. Weitere vorteilhafte Ausgestaltungen sind in den abhängigen Ansprüchen angegeben. Die in den Ansprüchen und in der Beschreibung dargestellten Merkmale sind in beliebiger, technologisch sinnvoller Weise miteinander kombinierbar.

Erfindungsgemäß wird eine Vorrichtung zur Abstandsmessung vorgestellt. Die Vorrichtung umfasst:
- einen ersten Abstandssensor zum Messen eines ersten Abstands, welcher sich zwischen dem ersten Abstandssensor und einem Objekt erstreckt,
- einen zweiten Abstandssensor zum Messen eines zweiten Abstands, welcher sich zwischen dem zweiten Abstandssensor und dem Objekt erstreckt,
- eine Strahlungsquelle für elektromagnetische Strahlung,
- einen Strahlungsdetektor für die elektromagnetische Strahlung,
wobei die Vorrichtung derart ausgebildet ist, dass mit der Strahlungsquelle und dem Strahlungsdetektor eine Änderung eines Abstands zwischen dem ersten Abstandssensor und dem zweiten Abstandssensor bestimmbar ist.

Mit der beschriebenen Vorrichtung können Abstände z.B. zwischen zwei Abstandssensoren gemessen werden. Des Weiteren weist die Vorrichtung zwei Abstandssensoren auf. Mit diesen kann jeweils ein Abstand zu einer Oberfläche eines Objekts gemessen werden. Beispielsweise kann mit der Vorrichtung die Dicke des Objekts gemessen werden. Dazu können die mit den beiden Abstandssensoren gemessenen Abstände von dem, zuvor für einen Zeitpunkt, ermittelten Referenzabstand zwischen den beiden Abstandssensoren subtrahiert werden. Eine Veränderung des Abstands zwischen den beiden Abstandssensoren kann dabei ausgeglichen werden. Dazu weist die Vorrichtung die Strahlungsquelle und den Strahlungsdetektor auf. Mit diesen kann eine Änderung des Abstands zwischen den beiden Abstandssensoren gemessen werden. Dadurch kann eine Messgenauigkeit erreicht werden, die praktisch nur durch die kombinierte Messunsicherheit der beiden Abstandssensoren limitiert ist und nicht durch die Mechanik des Rahmens.

Die mit der Vorrichtung mögliche Abstandsmessung dient vorzugsweise der Bestimmung der Dicke des Objekts. In dem Fall kann die Vorrichtung auch als eine "Vorrichtung zum Messen einer Dicke eines Objekts" bezeichnet werden. Unter der Dicke des Objekts ist hier die Ausdehnung des Objekts entlang einer Achse zwischen dem ersten Abstandssensor und dem zweiten Abstandssensor zu verstehen. Die mit der Vorrichtung mögliche Abstandsmessung ist aber nicht zwingend eine Dickenmessung. Alternativ kann ein Abstand zwischen zwei Oberflächen des Objekts gemessen werden, der nicht als eine Dicke des Objekts aufzufassen ist. So ist es nicht zwingend, dass der erste Abstandssensor und der zweite Abstandssensor einander entgegengerichtet sind.

Die beiden Abstandssensoren können gemeinsam an einem Rahmen gehalten sein. Das ist aber nicht erforderlich. Die beiden Abstandssensoren können auch unabhängig voneinander im Raum fixiert sein.

Das mit der Vorrichtung zu vermessende Objekt ist vorzugsweise ein Bandmaterial. Ist die Vorrichtung dazu eingerichtet, die Dicke des Bandmaterials zu messen, kann die Vorrichtung auch als eine "Vorrichtung zum Messen einer Dicke eines Bandmaterials" bezeichnet werden. Besonders bevorzugt ist das Bandmaterial aus einem Metall gebildet. Beispielsweise kann die Vorrichtung bei der Stahlproduktion eingesetzt werden, um die Dicke einer produzierten Stahlbahn zu messen. Alternativ kann die Vorrichtung aber auch dazu eingesetzt werden, einzelne Bauteile wie beispielsweise Stahlplatten zu vermessen.

Die Vorrichtung umfasst einen ersten Abstandssensor und einen zweiten Abstandssensor. Die Abstandssensoren sind jeweils dazu geeignet, einen jeweiligen Abstand zu der Oberfläche des Objekts zu messen.

Der mit dem ersten Abstandssensor aufzunehmende erste Abstand ist der Abstand zwischen dem ersten Abstandssensor und der Oberfläche des Objekts. Der Abstandswert bezieht sich auf einen Nullpunkt im Abstandsmessbereich des ersten Abstandssensors. Dieser Nullpunkt legt fest, welcher Punkt des ausgedehnten ersten Abstandssensors für die Messung des ersten Abstands verwendet wird. Der Nullpunkt kann frei gewählt werden, solange sich alle Messungen auf den gleichen Nullpunkt beziehen. Insbesondere ist der Abstand zwischen den beiden Abstandssensoren zwischen den Nullpunkten der Abstandssensoren definiert.

Der erste Abstandssensor ist vorzugsweise als ein Triangulationssensor ausgebildet, insbesondere als ein Laser-Triangulationssensor. Der erste Abstand wird vorzugsweise unter Verwendung elektromagnetischer Strahlung gemessen, insbesondere unter Verwendung von sichtbarem Licht. Der erste Abstandssensor kann auch dazu ausgebildet sein, den ersten Abstand durch eine Laufzeitmessung zu bestimmen. In einer weiteren Ausführung kann der erste Abstandssensor auch dazu ausgebildet sein, den ersten Abstand mit einer (polychromatisch) konfokalen Methode zu messen.

Für den zweiten Abstandssensor gilt das zum ersten Abstandssensor gesagte entsprechend. Bevorzugt sind der erste Abstandssensor und der zweite Abstandssensor identisch zueinander ausgebildet. Messfehler können dadurch symmetrisch auftreten und daher leichter erkannt und/oder korrigiert werden.

Mit der beschriebenen Vorrichtung kann eine besonders hohe Messgenauigkeit erreicht werden. Das ist möglich, weil Änderungen des Abstands zwischen den beiden Abstandssensoren bestimmt werden können. Dazu weist die Vorrichtung mindestens eine Strahlungsquelle für elektromagnetische Strahlung und mindestens einen Strahlungsdetektor auf.

Die Strahlungsquelle ist dazu geeignet, elektromagnetische Strahlung auszusenden, insbesondere Licht. Der Strahlungsdetektor ist dazu geeignet, die elektromagnetische Strahlung quantitativ und räumlich aufgelöst zu detektieren. Der Strahlungsdetektor ist insbesondere für die von der Strahlungsquelle ausgesendete elektromagnetische Strahlung sensitiv. So kann die Strahlungsquelle beispielsweise eine Lampe und der Strahlungsdetektor ein CCD-Sensor oder ein CMOS-Sensor sein.

In einer bevorzugten Ausführungsform weist die Vorrichtung zwei Strahlungsquellen und zwei Strahlungsdetektoren auf. Dabei ist ein erster Strahlungsdetektor so angeordnet und ausgerichtet, dass mit diesem die von der ersten Strahlungsquelle ausgesendete elektromagnetische Strahlung gemessen werden kann. Ein zweiter Strahlungsdetektor ist so angeordnet und ausgerichtet, dass mit diesem die von der zweiten Strahlungsquelle ausgesendete elektromagnetische Strahlung gemessen werden kann. Die erste Strahlungsquelle ist vorzugsweise am ersten Abstandssensor angeordnet, die zweite Strahlungsquelle ist vorzugsweise am zweiten Abstandssensor angeordnet. "Am" bedeutet dabei, dass ein Abstand zwischen der Strahlungsquelle und dem jeweiligen Abstandssensor höchstens 10 % der Strecke "s" eines fiktiven mechanischen Kräfteflusses beträgt. Die Strecke "s" sei der Weg einer Kraft, deren Angriffspunkt am ersten Abstandssensor anliegt und die von einer Reaktionskraft am zweiten Abstandssensor aufgenommen werde. Die beiden Strahlungsdetektoren sind vorzugsweise voneinander beabstandet gehalten, beispielsweise an einem Halteelement, welches insbesondere aus einem Material mit einem Längenausdehnungskoeffizienten von höchstens 4,0 10E-06 1/K bei 20°C gebildet sein kann. Im Folgenden wird diese Ausführungsform beispielhaft anhand eines dreidimensionalen kartesischen Koordinatensystems beschrieben. Das Objekt liegt dabei in einer Ebene aus einer ersten und einer zweiten Richtung. Die Abstandsskala vom ersten Abstandssensor und vom zweiten Abstandssensor liegt auf einer Achse, die sich entlang einer dritten Richtung erstreckt. Die dritte Richtung ist vorzugsweise eine Höhenrichtung. Das bezieht sich auf die bestimmungsgemäße Orientierung der Vorrichtung im Betrieb. Der erste Strahlungsdetektor ist auf einer ersten Höhe angeordnet. In einer Ausgangsstellung sind auch der erste Abstandssensor und die erste Strahlungsquelle auf der ersten Höhe angeordnet. Die von der ersten Strahlungsquelle ausgesendete elektromagnetische Strahlung weist in dem Fall parallel zur zweiten Richtung. Durch Schwingungen und/oder durch thermische Verformung kann sich die Höhenposition der ersten Strahlungsquelle verändern. Dies kann mit dem ersten Strahlungsdetektor erkannt werden. Entsprechendes gilt für den zweiten Abstandssensor, die zweite Strahlungsquelle und den zweiten Strahlungsdetektor in Bezug auf eine von der ersten Höhe verschiedenen zweiten Höhe. Aus den Signalen des ersten Strahlungsdetektors und des zweiten Strahlungsdetektors kann damit die Änderung des Abstandes zwischen den Abstandssensoren bestimmt werden.

Eine weitere bevorzugte Ausführungsform entspricht der zuvor beschriebenen Ausführungsform, wobei die Positionen der ersten Strahlungsquelle und des ersten Strahlungsdetektors gegeneinander vertauscht sind und/oder die Positionen der zweiten Strahlungsquelle und des zweiten Strahlungsdetektors gegeneinander vertauscht sind. In dieser Ausführungsform kann die Änderung des Abstandes zwischen den beiden Abstandssensoren gleichermaßen bestimmt werden wie bei der zuvor beschriebenen Ausführungsform.

In einer weiteren bevorzugten Ausführungsform weist die Vorrichtung genau eine Strahlungsquelle und genau einen Strahlungsdetektor auf. Dabei ist der Strahlungsdetektor so angeordnet und ausgerichtet, dass mit diesem die von der Strahlungsquelle ausgesendete elektromagnetische Strahlung gemessen werden kann. Die Strahlungsquelle ist vorzugsweise am ersten Abstandssensor oder am zweiten Abstandssensor angeordnet. "Am" ist dabei analog zu oben definiert. Der Strahlungsdetektor ist vorzugsweise an einem Halteelement gehalten, welches insbesondere aus einem Material mit einem Längenausdehnungskoeffizienten von höchstens 4,0 10E-06 1/K bei 20°C gebildet sein kann. Im Folgenden wird diese Ausführungsform beispielhaft anhand des auch zuvor verwendeten dreidimensionalen kartesischen Koordinatensystems beschrieben. In einem Ausgangszustand ist der Strahlungsdetektor vorzugsweise auf der gleichen Höhe angeordnet wie die Strahlungsquelle. Die von der Strahlungsquelle ausgesendete elektromagnetische Strahlung weist in dem Fall parallel zur zweiten Richtung. In der zweiten Richtung sind die Strahlungsquelle und der Strahlungsdetektor voneinander beabstandet. Durch Schwingungen und/oder durch thermische Verformung kann sich die Höhenposition der Strahlungsquelle verändern. Dies kann mit dem Strahlungsdetektor erkannt werden. Durch Extrapolation kann daraus die Änderung des Abstands zwischen den beiden Abstandssensoren bestimmt werden. Sind die beiden Abstandssensoren beispielsweise symmetrisch an einem Rahmen angeordnet, ist die Änderung des Abstandes zwischen den beiden Abstandssensoren doppelt so groß wie die mit dem Strahlungsdetektor ermittelte Verschiebung des ersten bzw. zweiten Abstandssensors.

Eine weitere bevorzugte Ausführungsform entspricht der zuvor beschriebenen Ausführungsform, wobei die Positionen der Strahlungsquelle und des Strahlungsdetektors gegeneinander vertauscht sind.

Es ist nicht erforderlich, dass der Strahlungsdetektor und die Strahlungsquelle auf der gleichen Höhe angeordnet sind. Eine Veränderung der Höhenposition der Strahlungsquelle kann auch bei schräg zu den Achsen des Koordinatensystems orientierter elektromagnetischer Strahlung bestimmt werden. Zudem können ein oder mehrere Umlenkspiegel verwendet werden. Wird nur ein Umlenkspiegel verwendet, so hat der Strahlengang zwei Abschnitte. Ein erster kann sich beispielsweise parallel zur zweiten Richtung von der Strahlungsquelle zum Umlenkspiegel erstrecken, während sich ein zweiter Abschnitt parallel zur dritten Richtung vom Umlenkspiegel zum Strahlungsdetektor erstreckt. In einer solchen Anordnung kann der Umlenkspiegel auf der Höhe des Objekts seitlich neben dem Objekt liegen.

Erfindungsgemäß umfasst die Vorrichtung weiterhin zwei Umlenkspiegel, wobei die Strahlungsquelle und der Strahlungsdetektor derart angeordnet sind, dass eine Änderung eines Abstands zwischen der Strahlungsquelle und dem Strahlungsdetektor ein Maß für eine Änderung eines Abstands zwischen dem ersten Abstandssensor und dem zweiten Abstandssensor ist, und wobei die Strahlungsquelle, die Umlenkspiegel und der Strahlungsdetektor derart ausgebildet und angeordnet sind, dass die von der Strahlungsquelle ausgesendete elektromagnetische Strahlung über die Umlenkspiegel auf den Strahlungsdetektor fällt, so dass eine Änderung des Abstands zwischen der Strahlungsquelle und dem Strahlungsdetektor mit einem Signal des Strahlungsdetektors bestimmbar ist.

Hier genügt es, dass die Vorrichtung genau eine Strahlungsquelle und genau einen Strahlungsdetektor zur Bestimmung des Abstandes zwischen den beiden Abstandssensoren aufweist. Das reduziert die erforderliche Elektronik und ist daher entsprechend günstiger als Ausführungsformen mit mehreren Strahlungsquellen und Strahlungsdetektoren.

Die Strahlungsquelle und der Strahlungsdetektor sind derart angeordnet, dass eine Änderung eines Abstands zwischen der Strahlungsquelle und dem Strahlungsdetektor ein Maß für eine Änderung eines Abstands zwischen dem ersten Abstandssensor und dem zweiten Abstandssensor ist. Vorzugsweise ist dies dadurch realisiert, dass eine Änderung des Abstands zwischen dem ersten Abstandssensor und dem zweiten Abstandssensor eine gleich große Änderung des Abstands zwischen der Strahlungsquelle und dem Strahlungsdetektor bewirkt. Durch Messung der Änderung des Abstands zwischen der Strahlungsquelle und dem Strahlungsdetektor kann daher die Änderung des Abstands zwischen den Abstandssensoren bestimmt werden. Das ist insbesondere dann möglich, wenn der erste Abstandssensor starr mit der Strahlungsquelle verbunden ist und/oder der zweite Abstandssensor starr mit dem Strahlungsdetektor verbunden ist. "Starr" bedeutet dabei, dass eine Verschiebung zwischen dem ersten Abstandssensor und der Strahlungsquelle beziehungsweise zwischen dem zweiten Abstandssensor und dem Strahlungsdetektor gegenüber der zu detektierenden Änderung des Abstands zwischen den Abstandssensoren vernachlässigbar ist. Das ist insbesondere dann der Fall, wenn die Verschiebung zwischen dem ersten Abstandssensor und der Strahlungsquelle beziehungsweise zwischen dem zweiten Abstandssensor und dem Strahlungsdetektor weniger als 10 % der zu detektierenden Änderung des Abstands zwischen den Abstandssensoren entspricht. Zudem kann eine Änderung des Abstands zwischen der dem ersten Abstandssensor und dem zweiten Abstandssensor insbesondere dann eine gleich große Änderung des Abstands zwischen der Strahlungsquelle und dem Strahlungsdetektor bewirken, wenn der Strahlungsdetektor am ersten Abstandssensor angeordnet ist und/oder der Strahlungsdetektor am zweiten Abstandssensor angeordnet ist. "Am" ist dabei analog zu oben definiert. Das gleiche gilt entsprechend für den Strahlungsdetektor und den zweiten Abstandssensor. Beispielsweise kann die Strahlungsquelle am ersten Abstandssensor befestigt sein und/oder der Strahlungsdetektor am zweiten Abstandssensor befestigt sein.

Die Strahlungsquelle, die Umlenkspiegel und der Strahlungsdetektor sind derart ausgebildet und angeordnet, dass die von der Strahlungsquelle ausgesendete elektromagnetische Strahlung über die Umlenkspiegel auf den Strahlungsdetektor fällt, so dass eine Änderung des Abstands zwischen der Strahlungsquelle und dem Strahlungsdetektor mit einem Signal des Strahlungsdetektors bestimmbar ist.

Der erste Abstandssensor und der zweite Abstandssensor sind voneinander beabstandet angeordnet. So kann das Objekt zwischen den ersten Abstandssensor und den zweiten Abstandssensor gebracht werden, wodurch insbesondere die Dicke des Objekts gemessen werden kann. Da die Strahlungsquelle und der Strahlungsdetektor vorzugsweise nahe an dem ersten Abstandssensor beziehungsweise an dem zweiten Abstandssensor angeordnet sind, versperrt das Objekt den direkten Weg zwischen der Strahlungsquelle und dem Strahlungsdetektor. Um dennoch den Abstand zwischen der Strahlungsquelle und dem Strahlungsdetektor optisch messen zu können, werden zwei Umlenkspiegel verwendet. Die Strahlungsquelle, die Umlenkspiegel und der Strahlungsdetektor sind vorzugsweise derart ausgebildet und angeordnet, dass ein C-förmiger Strahlengang erhalten wird. Vorzugsweise weist der Strahlengang mindestens drei Abschnitte auf. So kann der Strahlengang in einem ersten Abschnitt von der Strahlungsquelle unterhalb des Objekts entlanggeführt werden, bis das Ende des Objekts erreicht ist. Anschließend kann der Strahlengang über den ersten Umlenkspiegel nach oben umgelenkt werden und so seitlich am Objekt vorbeigeführt werden. Dies ist der zweite Abschnitt. Oberhalb des Objekts kann der Strahlengang dann durch den zweiten Umlenkspiegel so umgelenkt werden, dass der Strahlengang als dritter und letzter Abschnitt oberhalb des Objekts zum Strahlungsdetektor geführt wird. Werden mehr als zwei Umlenkspiegel verwendet, hat der Strahlengang entsprechend mehr Abschnitte zwischen dem ersten Abschnitt und dem letzten Abschnitt.

Die drei Abschnitte des Strahlengangs bilden vorzugsweise eine C-Form. Dabei ist es zwar bevorzugt, aber nicht erforderlich, dass benachbarte Abschnitte des Strahlengangs senkrecht zueinander stehen. Die gewünschte Funktionalität wird bereits dadurch erreicht, dass der erste und letzte Abschnitt des Strahlengangs in einer Richtung einander entgegenstehe Komponenten haben und dass ein dazwischenliegender Abschnitt in einer anderen Richtung eine von null verschiedene Komponente hat. Das bezieht sich auf eine vektorielle Betrachtung der Richtungen der Abschnitte. Im Folgenden wird dies beispielhaft anhand des oben eingeführten dreidimensionalen kartesischen Koordinatensystems beschrieben. Der erste Abschnitt des Strahlengangs weist vorzugsweise in die zweite Richtung, der zweite Abschnitt in die dritte Richtung und der dritte Abschnitt entgegen der zweiten Richtung. Das bedeutet, dass der erste und dritte Abschnitt des Strahlengangs in der zweiten Richtung einander entgegenstehende Komponenten haben und dass der dazwischenliegende zweite Abschnitt in der dritten Richtung eine von null verschiedene Komponente hat. Die Komponenten des ersten und des dritten Abschnitts in der ersten und dritten Richtung sind in diesem Beispiel null, die Komponenten des zweiten Abschnitts in der ersten und zweiten Richtung ebenso. Das ist für die gewünschte Funktionalität aber nicht erforderlich. Bevorzugt ist es aber, dass der erste Abschnitt und/oder der letzte Abschnitt jeweils nicht mehr als 20° von einer Richtung senkrecht zu einer Achse zwischen dem ersten Abstandssensor und dem zweiten Abstandssensor abweichen. In dem beschriebenen Beispiel ist das der Fall, wenn der erste Abschnitt und/oder der dritte Abschnitt jeweils nicht mehr als 20° von der zweiten Richtung abweichen. Der zweite Abschnitt weicht vorzugsweise nicht mehr als 20° von der dritten Richtung ab.

Der erste Abschnitt und der letzte Abschnitt haben vorzugsweise Längen, die sich um nicht mehr als 20 % voneinander unterscheiden. Besonders bevorzugt haben der erste Abschnitt und der letzte Abschnitt die gleiche Länge. Beispielsweise können der erste Abschnitt und der letzte Abschnitt jeweils eine Länge im Bereich von 500 und 1000 mm haben. Der zwischen dem ersten und dem letzten Abschnitt liegende Teil des Strahlengangs hat vorzugsweise eine Länge im Bereich von 100 und 500 mm.

Der Abstand zwischen dem ersten Abstandssensor und dem zweiten Abstandssensor kann sich insbesondere dadurch verändern, dass sich der erste Abstandssensor und der zweite Abstandssensor in oder entgegen der dritten Richtung relativ zueinander bewegen. Entsprechend bewegen sich die Strahlungsquelle und der Strahlungsdetektor relativ in oder entgegen der dritten Richtung relativ zueinander. Das führt dazu, dass das Abbild der Strahlungsquelle auf dem Strahlungsdetektor in oder entgegen der dritten Richtung bewegt wird. Diese Bewegung ist ein Maß dafür, wie sich die Strahlungsquelle und der Strahlungsdetektor relativ zueinander bewegt haben und damit dafür, wie sich der erste Abstandssensor und der zweite Abstandssensor relativ zueinander bewegt haben.

Es ist bevorzugt, dass der Strahlungsdetektor jedenfalls in einer Richtung parallel zu einer Achse zwischen dem ersten Abstandssensor und dem zweiten Abstandssensor ortsaufgelöst ist. Im beschriebenen Beispiel ist dies die dritte Richtung. So kann eine Bewegung der Strahlungsquelle und des Strahlungsdetektors relativ zueinander in oder entgegen dieser Richtung gemessen werden. Damit lässt sich eine Bewegung des ersten Abstandssensors und des zweiten Abstandssensors relativ zueinander in oder entgegen dieser Richtung bestimmen. Der Strahlungsdetektor kann aber auch zweidimensional ortsaufgelöst sein, vorzugsweise in der ersten und dritten Richtung. Dadurch können auch Veränderungen in der ersten Richtung erkannt werden. In dem Fall kann beispielsweise ein Warnsignal ausgegeben werden, sobald diese Änderung einen Grenzwert überschreitet. Basierend auf der Veränderung in der ersten Richtung kann beispielsweise eine trigonometrische Korrektur eines Messfehlers, der durch nicht kollineare Anordnung der Abstandssensoren entsteht, an der Vorrichtung oder an dem Objekt vorgenommen werden. Sowohl bei einem eindimensional als auch bei einem zweidimensional auflösenden Strahlungsdetektor wird vorzugsweise die Position des Schwerpunkts der detektierten Strahlungsintensität bestimmt und als die Position der elektromagnetischen Strahlung am Strahlungsdetektor angesehen. Aus dieser Position kann die Änderung des Abstandes zwischen der Strahlungsquelle und dem Strahlungsdetektor bestimmt werden.

Erfindungsgemäß weist die Vorrichtung weiterhin eine abbildende Optik auf, die mindestens eine optische Hauptebene hat, die zwischen den beiden Umlenkspiegeln angeordnet ist.

Die abbildende Optik dient dazu, die Strahlungsquelle auf den Strahlungsdetektor abzubilden. Die abbildende Optik ist vorzugsweise eine Linseneinheit. Die Linseneinheit ist vorzugsweise derart ausgebildet und angeordnet, dass die Bildebene der Strahlungsquelle im Strahlungsdetektor liegt. In einer alternativen Ausführung können die Umlenkspiegel die Funktion einer abbildenden Optik miterfüllen. Dazu ist die Oberfläche zumindest eines Spiegels konkav geformt. Die Hauptebenen der abbildenden Optik können einen nennenswerten Abstand aufweisen oder praktisch in einer Hauptebene zusammenfallen. Im Folgenden wird nur auf eine Hauptebene Bezug genommen, was die Verwendung einer abbildenden Optik, die zwei Hauptebenen aufweist, nicht ausschließt.

In dieser Ausführungsform weist die Vorrichtung vorzugsweise genau zwei Umlenkspiegel in dem Strahlengang zwischen der Strahlungsquelle und dem Strahlungsdetektor auf. Die optische Hauptebene der Linseneinheit liegt in dieser Ausführungsform im mittleren der Abschnitte des Strahlengangs. Dadurch kann die optische Hauptebene in der Mitte oder jedenfalls nahe der Mitte des Strahlengangs zwischen der Strahlungsquelle und dem Strahlungsdetektor angeordnet sein. Dies ergibt eine Symmetrie im Strahlengang und eine eins zu eins Abbildung der Strahlungsquelle auf den Strahlungsdetektor. Das steigert die Messgenauigkeit, weil eine Veränderung der Position der Strahlungsquelle eine gleich große oder jedenfalls nahezu gleich große Veränderung am Strahlungsdetektor bewirkt.

Die Linseneinheit kann aus einer einzelnen Linse bestehen. Deren optische Hauptebene kann innerhalb der Linse liegen. Im Falle einer einzelnen Linse als Linseneinheit ist es bevorzugt, dass die Linse zwischen den Umlenkspiegeln angeordnet ist. Die einzelne Linse ist vorzugsweise eine bikonvexe Linse.

In einer weiteren bevorzugten Ausführungsform der Vorrichtung sind die Strahlungsquelle, die Linseneinheit und der Strahlungsdetektor derart ausgebildet und angeordnet, dass die Linseneinheit die Strahlungsquelle mit einem Abbildungsmaßstab im Bereich von 1:0,1 bis 1:10, vorzugsweise von möglichst genau 1:1, auf den Strahlungsdetektor abbildet.

In dieser Ausführungsform kann die Änderung im Abstand zwischen der Strahlungsquelle und dem Strahlungsdetektor direkt gemessen werden. Das liegt daran, dass eine Veränderung der Position der Strahlungsquelle eine gleich große oder jedenfalls nahezu gleich große Veränderung am Strahlungsdetektor bewirkt. Bei anderen Abbildungsmaßstäben muss der Messwert am Strahlungsdetektor entsprechend dem Abbildungsmaßstab skaliert werden.

In einer weiteren bevorzugten Ausführungsform der Vorrichtung sind die Umlenkspiegel an einem Halteelement gehalten, welches aus einem Material mit einem Längenausdehnungskoeffizienten von höchstens 4,0 10E-06 1/K bei 20°C gebildet ist.

Durch das Halteelement bleibt die relative Anordnung der Umlenkspiegel weitestmöglich konstant. Das liegt daran, dass die thermische Ausdehnung des Halteelements vergleichsweise gering ist. Vorzugsweise ist das Halteelement aus einer Keramik, insbesondere einer Glaskeramik, aus Glas oder aus Invar gebildet.

Sofern die Vorrichtung auch eine Linseneinheit aufweist, ist vorzugsweise auch die Linseneinheit an dem Halteelement gehalten.

In einer weiteren bevorzugten Ausführungsform weist die Vorrichtung weiterhin einen Rahmen mit einem ersten Arm, einem zweiten Arm und einem Verbindungsteil auf, wobei der erste Arm über das Verbindungsteil mit dem zweiten Arm verbunden ist, wobei der erste Abstandssensor und die Strahlungsquelle von dem ersten Arm gehalten sind, die Umlenkspiegel von dem Verbindungsteil gehalten sind und der zweite Abstandssensor und der Strahlungsdetektor von dem zweiten Arm gehalten sind.

Sofern die Vorrichtung auch eine Linseneinheit aufweist, ist vorzugsweise auch die Linseneinheit von dem Verbindungsteil gehalten.

Der erste Abschnitt des Strahlengangs verläuft vorzugsweise im oder am ersten Arm, der zweite Abschnitt des Strahlengangs im oder am Verbindungsteil und der dritte Abschnitt im oder am zweiten Arm. Der erste Abstandssensor und die Strahlungsquelle sind vorzugsweise insoweit von dem ersten Arm gehalten, als dass der erste Abstandssensor und die Strahlungsquelle innerhalb des ersten Arms angeordnet sind. Die Umlenkspiegel und, falls vorgesehen, die Linseneinheit sind vorzugsweise insoweit von dem Verbindungsteil gehalten, als dass die Umlenkspiegel und die Linseneinheit innerhalb des Verbindungsteils angeordnet sind. Der zweite Abstandssensor und der Strahlungsdetektor sind vorzugsweise insoweit von dem zweiten Arm gehalten, als dass der zweite Abstandssensor und der Strahlungsdetektor innerhalb des zweiten Arms angeordnet sind.

Der erste Arm und der zweite Arm sind vorzugsweise zueinander parallel oder stehen jedenfalls in einem Winkel von weniger als 20° zueinander. Beispielsweise können der erste Arm und der zweite Arm entlang der zweiten Richtung ausgerichtet sein, während das Verbindungsteil entlang der dritten Richtung ausgebildet ist. Dies bezieht sich jeweils auf die Orientierung einer Achse des ersten Arms, des zweiten Arms beziehungsweise des Verbindungsteils. Im Übrigen gilt für die Orientierung der Arme und des Verbindungsteils des Rahmens das oben zur Orientierung der Abschnitte des Strahlengangs gesagte entsprechend.

Der Rahmen ist vorzugsweise am Verbindungsteil gehalten, insbesondere nur am Verbindungsteil. Besonders bevorzugt ist der Rahmen über einen oder mehrere Träger an einem Untergrund gehalten, wobei der oder die Träger vorzugsweise mittig an dem Verbindungsteil befestigt sind. Der Rahmen ist in dem Fall als ein Paar von Kragarmen ausgebildet. Schwingungen und/oder thermische Verformungen bereiten sich so symmetrisch in den Armen aus. Genannte Einflüsse am Rahmen sind auf diese Weise bezüglich einer Dickenmessung konstruktiv minimiert. Diese konstruktive Berücksichtigung ist unter Verwendung des beschriebenen Verfahrens möglicherweise hilfreich, jedoch nicht notwendig. Der Rahmen kann auch an der Verbindungsstelle zwischen dem ersten Arm und dem Verbindungsarm auf einem Untergrund aufliegen. Der erste Arm und der zweite Arm sind vorzugsweise jeweils an einem ihrer Enden mit dem Verbindungsteil verbunden.

Das ist insbesondere der Fall bei der weiteren bevorzugten Ausführungsform der Vorrichtung, bei der der Rahmen als ein C-Rahmen ausgebildet ist.

Weist die Vorrichtung keine Umlenkspiegel auf, ist es dennoch bevorzugt, dass die Vorrichtung einen Rahmen mit einem ersten Arm, einem zweiten Arm und einem Verbindungsteil aufweist, wobei der erste Arm über das Verbindungsteil mit dem zweiten Arm verbunden ist. Der erste Abstandssensor ist in dem Fall von dem ersten Arm gehalten und der zweite Abstandssensor von dem zweiten Arm. Beispielsweise kann die einzige Strahlungsquelle am ersten Arm gehalten sein und der einzige Strahlungsdetektor am Verbindungsteil. Umgekehrt kann der einzige Strahlungsdetektor am ersten Arm gehalten sein und die einzige Strahlungsquelle am Verbindungsteil. Alternativ kann eine erste Strahlungsquelle am ersten Arm gehalten sein, eine zweite Strahlungsquelle am zweiten Arm und die beiden Strahlungsdetektoren am Verbindungsteil. Alternativ kann ein erster Strahlungsdetektor am ersten Arm gehalten sein, ein zweiter Strahlungsdetektor am zweiten Arm und die beiden Strahlungsquellen am Verbindungsteil.

In einer weiteren bevorzugten Ausführungsform der Vorrichtung sind der erste Abstandssensor und der zweite Abstandssensor derart ausgebildet und einander gegenüberliegend angeordnet, dass aus dem ersten Abstand und dem zweiten Abstand eine Dicke des Objekts bestimmbar ist.

Der erste Abstandssensor und der zweite Abstandssensor sind vorzugsweise derart ausgebildet und angeordnet, dass der erste Abstand und der zweite Abstand entlang der dritten Richtung definiert und ihre Messskalen kollinear zueinander ausgerichtet sind. Die Dicke des Objekts ist in dem Fall die Ausdehnung des Objekts in der dritten Richtung. Ist die dritte Richtung eine Höhenrichtung, kann der erste Abstandssensor den ersten Abstand zur Unterseite des Objekts messen. Der zweite Abstandssensor kann den zweiten Abstand zur Oberseite des Objekts messen.

In einer weiteren bevorzugten Ausführungsform der Vorrichtung ist die Strahlungsquelle eine Lichtquelle für inkohärentes Licht.

Inkohärentes Licht hat den Vorteil, dass Speckleeffekte vermieden werden. Die Lichtquelle ist vorzugsweise eine LED. Das Licht ist vorzugsweise sichtbares Licht.

Als ein weiterer Aspekt der Erfindung wird ein Verfahren zur Abstandsmessung mit einer wie beschrieben ausgebildeten Vorrichtung vorgestellt. Das Verfahren umfasst:
a) Bestimmen eines Referenzwertes für den Abstand zwischen dem ersten Abstandssensor und dem zweiten Abstandssensor,
b) Bestimmen eines Korrekturwertes für den Abstand zwischen dem ersten Abstandssensor und dem zweiten Abstandssensor, indem mit einem Signal des Strahlungsdetektors eine Änderung des Abstands zwischen dem ersten Abstandssensor und dem zweiten Abstandssensor gegenüber dem in Schritt a) bestimmten Referenzwert bestimmt wird,
c) Bestimmen eines Messergebnisses aus einem mit dem ersten Abstandssensor gemessenen ersten Abstand, einem mit dem zweiten Abstandssensor gemessenen zweiten Abstand sowie aus dem in Schritt a) bestimmten Referenzwert und dem in Schritt b) bestimmten Korrekturwert für den Abstand zwischen dem ersten Abstandssensor und dem zweiten Abstandssensor.

Die beschriebenen Vorteile und Merkmale der Vorrichtung sind auf das Verfahren anwendbar und übertragbar, und umgekehrt. Die Vorrichtung ist vorzugsweise zum Betrieb gemäß dem Verfahren eingerichtet.

Schritt a) ist eine Referenzierung, die beispielsweise einmalig bei Inbetriebnahme der Vorrichtung durchgeführt werden kann. Dazu kann der Abstand zwischen dem ersten Abstandssensor und dem zweiten Abstandssensor mit einem Präzisionsmessinstrument gemessen werden. Das erfolgt vorzugsweise ohne Objekt zwischen dem ersten Abstandssensor und dem zweiten Abstandssensor, so dass der Abstand zwischen dem ersten Abstandssensor und dem zweiten Abstandssensor auf direktem Wege und entsprechend genau gemessen werden kann. Bevorzugt kann der Abstand zwischen dem ersten Abstandssensor und dem zweiten Abstandssensor über eine Maßverkörperung exakt bekannter Dicke direkt anhand der Abstandsmesswerte der beiden Abstandssensoren ermittelt werden. "Exakt" meint mit einer Genauigkeit, die mindestens eine Größenordnung kleiner ist, als die Messgenauigkeit der Vorrichtung. Die Maßverkörperung kann an der Vorrichtung dauerhaft montiert sein und so auch in Betriebspausen automatisch eine Referenzierung ermöglichen.

Mit Schritt b) wird der Tatsache Rechnung getragen, dass sich der Abstand zwischen dem ersten Abstandssensor und dem zweiten Abstandssensor mit der Zeit verändert, beispielsweise durch thermische Ausdehnung, aufgrund von Schwingungen und/oder durch eine Änderung der äußerlich auf den Rahmen wirkenden Kräfte. In Schritt b) wird ein Korrekturwert bestimmt, der die Abweichung des tatsächlichen momentanen Wertes von dem in Schritt a) bestimmten Referenzwert angibt. Im Unterschied zu dem in Schritt a) bestimmten Referenzwert bezieht sich der in Schritt b) bestimmte Korrekturwert nicht auf den absoluten Abstand der beiden Abstandssensoren, sondern nur auf eine Änderung dieses Abstands seit der letzten Referenzierung.

In Schritt c) wird ein Messergebnis aufgenommen. Dabei kann es sich insbesondere um die Dicke des Objekts handeln. Diese kann berechnet werden, indem der erste Abstand und der zweite Abstand von dem Abstand zwischen dem ersten Abstandssensor und dem zweiten Abstandssensor subtrahiert wird. Der momentane Abstand zwischen dem ersten Abstandssensor und dem zweiten Abstandssensor wird dabei aus dem in Schritt a) bestimmten Referenzwert und dem zuletzt gemäß Schritt b) bestimmten Korrekturwert bestimmt.

Die Schritte a), b) und c) müssen nicht zyklisch nacheinander durchgeführt werden. Sobald Schritt a) einmal durchgeführt worden ist, können die weiteren Schritte einmal oder mehrfach durchgeführt werden. Sobald Schritt b) einmal durchgeführt worden ist, kann Schritt c) einmal oder mehrfach durchgeführt werden. Beispielsweise kann eine Referenzierung in Schritt a) einmalig durchgeführt werden. Anschließend kann Schritt b) periodisch in vorgegebenen Zeitabständen durchgeführt werden. Schritt c) kann ebenfalls periodisch in vorgegebenen Zeitabständen durchgeführt werden, wobei die vorgegebenen Zeitabstände für die Schritte b) und c) nicht die gleichen sein müssen.

Es ist aber die Ausführungsform des Verfahrens bevorzugt, bei der Schritt c) für eine Vielzahl von Messpunkten zeitgleich durchgeführt wird, wobei Schritt b) für jeden der Messpunkte jeweils einmal durchgeführt wird.

In dieser Ausführungsform wird weiter bevorzugt, dass die Korrekturwerterfassung aus Schritt b) zeitgleich bzw. synchron zur Abstandswerterfassung der Abstandssensoren aus Schritt c) erfolgt. "Zeitgleich" bezieht sich auf eine Zeitskala mindestens eine Größenordnung unterhalb der Zeitperiode, in der mechanische Änderungen im Rahmen auftreten, die von der beschriebenen Vorrichtung aufgelöst werden können.

In einer weiteren bevorzugten Ausführungsform des Verfahrens ist das Objekt ein relativ zu der Vorrichtung bewegtes Bandmaterial.

Das Bandmaterial ist vorzugsweise ein Metall. Vorzugsweise ist Vorrichtung in Ruhe und das Bandmaterial wird an der Vorrichtung vorbeigeführt. Das Bandmaterial und die Vorrichtung bewegen sich vorzugsweise entlang oder entgegen der ersten Richtung relativ zueinander.

Die Erfindung wird nachfolgend anhand der Figuren näher erläutert. Die Figuren zeigen ein besonders bevorzugtes Ausführungsbeispiel, auf das die Erfindung jedoch nicht begrenzt ist. Die Figuren und die darin dargestellten Größenverhältnisse sind nur schematisch. Es zeigen:
- Fig. 1:: eine erfindungsgemäße Vorrichtung zur Abstandsmessung,
- Fig. 2a bis 2c:: Detailansichten eines Teils der Vorrichtung aus Fig. 1,
- Fig. 3:: eine Visualisierung des Strahlengangs der Vorrichtung aus Fig. 1.

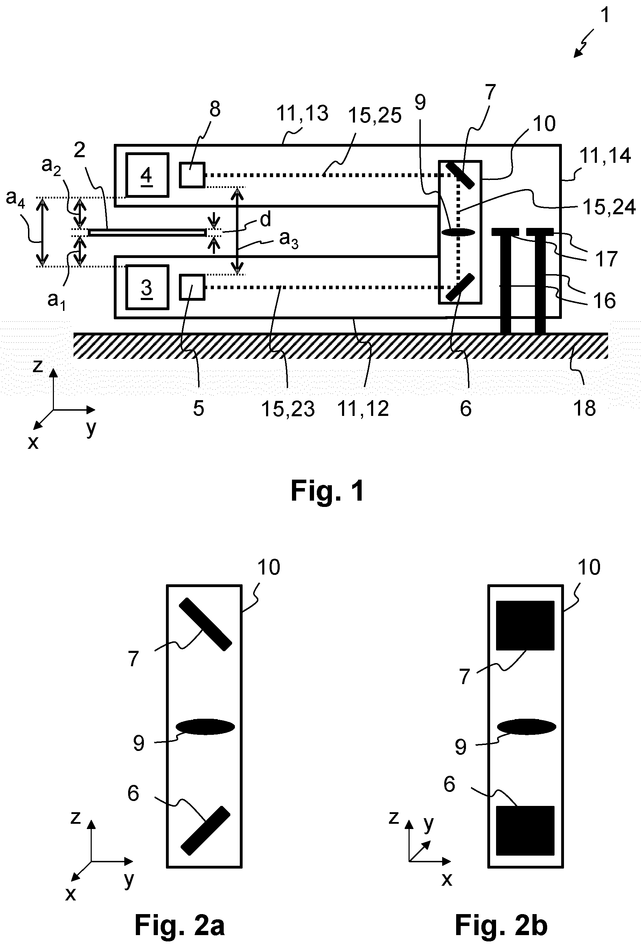

Fig. 1 zeigt eine Vorrichtung 1 zur Messung der Dicke d eines Objekts 2. Diese Messung erfolgt durch Abstandsmessungen. So umfasst die Vorrichtung 1 einen ersten Abstandssensor 3 zum Messen eines ersten Abstands a₁ und einen zweiten Abstandssensor 4 zum Messen eines zweiten Abstands a₂.

Die Vorrichtung wird unter Bezug auf ein Koordinatensystem beschrieben, welches eine erste Richtung x, eine zweite Richtung y und eine dritte Richtung z aufweist. Der erste Abstand a₁ erstreckt sich entlang der dritten Richtung z zwischen dem ersten Abstandssensor 3 und der Unterseite des Objekts 2. Der zweite Abstand a₂ erstreckt sich entlang der dritten Richtung z zwischen dem zweiten Abstandssensor 4 und der Oberseite des Objekts 2. Der erste Abstandssensor 3 und der zweite Abstandssensor 4 sind derart einander gegenüberliegend angeordnet, dass aus dem ersten Abstand a₁ und dem zweiten Abstand a₂ die Dicke d des Objekts 2 bestimmbar ist. Das ist möglich, indem der gemessene erste Abstand a₁ und der gemessene zweite Abstand a₂ von dem Abstand a₄ zwischen dem ersten Abstandssensor 3 und dem zweiten Abstandssensor 4 subtrahiert werden. Dabei kann es aber insbesondere dadurch zu einem Messfehler kommen, dass sich der Abstand a₄ zwischen dem ersten Abstandssensor 3 und dem zweiten Abstandssensor 4 über die Zeit verändert. Derartige Messfehler können insbesondere deshalb auftreten, weil die Vorrichtung 1 einen C-förmigen Rahmen 11 aufweist. Der Rahmen 11 hat einen ersten Arm 12, einen zweiten Arm 13 und ein Verbindungsteil 14. Der erste Arm 12 ist über das Verbindungsteil 14 mit dem zweiten Arm 13 verbunden. Der erste Abstandssensor 3 ist von dem ersten Arm 12 gehalten. Der zweite Abstandssensor 4 ist von dem zweiten Arm 13 gehalten. Durch die C-förmige Ausgestaltung des Rahmens 11 können die beiden Abstandssensoren 3,4 über und unter einem ausgedehnten Objekt 2 platziert werden. Allerdings können sich die beiden Arme 12,13 des Rahmens 11 relativ zueinander bewegen, womit sich der Abstand a₄ zwischen dem ersten Abstandssensor 3 und dem zweiten Abstandssensor 4 verändert.

Mit der Vorrichtung 1 ist es möglich, diese Änderung des Abstands a₄ zwischen dem ersten Abstandssensor 3 und dem zweiten Abstandssensor 4 bei der Bestimmung der Dicke d des Objekts 2 zu berücksichtigen. Dazu weist die Vorrichtung 1 eine LED als Strahlungsquelle 5 für inkohärentes Licht als elektromagnetische Strahlung, zwei Umlenkspiegel 6,7, eine Linseneinheit 9 und einen Strahlungsdetektor 8 für das Licht auf. Die von der Strahlungsquelle 5 ausgesendete Strahlung ist als ein Strahlengang 15 eingezeichnet. Ein erster Abschnitt 23 des Strahlengangs 15 läuft in die zweite Richtung y (in Fig. 1 also nach rechts), ein zweiter Abschnitt 24 des Strahlengangs 15 läuft in die dritte Richtung z (nach oben) und ein dritter Abschnitt 25 des Strahlengangs 15 läuft entgegen der zweiten Richtung y (nach links).

Die Linseneinheit 9 bildet die Strahlungsquelle 5 mit einem Abbildungsmaßstab von 1:1 auf den Strahlungsdetektor 8 ab. Die Linseneinheit 9 liegt zwischen den beiden Umlenkspiegeln 6,7. Die Linseneinheit 9 ist in der vorliegenden Ausführungsform als eine einzelne Linse ausgebildet.

Die Strahlungsquelle 5 und der Strahlungsdetektor 8 sind derart angeordnet, dass eine Änderung eines Abstands a₃ zwischen der Strahlungsquelle 5 und dem Strahlungsdetektor 8 eine gleich große Änderung eines Abstands a₄ zwischen dem ersten Abstandssensor 3 und dem zweiten Abstandssensor 4 bewirkt. Ist die Abstandsänderung von a₃ und a₄ nicht gleich groß, so kann von einem proportionalen Zusammenhang ausgegangen werden. Insoweit ist die Änderung eines Abstands a₃ zwischen der Strahlungsquelle 5 und dem Strahlungsdetektor 8 ein Maß für eine Änderung eines Abstands a₄ zwischen dem ersten Abstandssensor 3 und dem zweiten Abstandssensor 4. Das ist in der gezeigten Ausführungsform dadurch möglich, dass die Strahlungsquelle 5 am ersten Abstandssensor 3 angeordnet ist und von dem ersten Arm 12 gehalten ist und dass der Strahlungsdetektor 8 am zweiten Abstandssensor 4 angeordnet ist und von dem zweiten Arm 13 gehalten ist. Die Strahlungsquelle 5 bewegt sich also mit dem ersten Abstandssensor 3 und der Strahlungsdetektor 8 bewegt sich mit dem zweiten Abstandssensor 4. Der Abstand a₄ zwischen dem ersten Abstandssensor 3 und dem zweiten Abstandssensor 4 unterscheidet sich also durch einen Offset von dem Abstand a₃ zwischen der Strahlungsquelle 5 und dem Strahlungsdetektor 8. Für die Korrektur thermischer Ausdehnungseffekte zwischen Strahlungsdetektor 8 und Abstandssensor 4 bzw. zwischen Strahlungsquelle 5 und Abstandssensor 3 ist zu berücksichtigen, dass der Abstand a₃ vorzugsweise gleich dem Abstand a₄ ist. Andernfalls kann der Korrekturwert z.B. mit einem Faktor = a₃/a₄ angepasst werden.

Die Strahlungsquelle 5, die Umlenkspiegel 6,7, die Linseneinheit 9 und der Strahlungsdetektor 8 sind derart ausgebildet und angeordnet, dass die von der Strahlungsquelle 5 ausgesendete elektromagnetische Strahlung über einen ersten der Umlenkspiegel 6, durch die Linseneinheit 9 und über einen zweiten der Umlenkspiegel 7 auf den Strahlungsdetektor 8 fällt, so dass eine Änderung des Abstands a₃ zwischen der Strahlungsquelle 5 und dem Strahlungsdetektor 8 mit einem Signal des Strahlungsdetektors 8 bestimmbar ist. Da sich der Abstand a₄ zwischen dem ersten Abstandssensor 3 und dem zweiten Abstandssensor 4 z.B. nur durch einen Offset von dem Abstand a₃ zwischen der Strahlungsquelle 5 und dem Strahlungsdetektor 8 unterscheidet, kann so auch die Änderung des Abstands a₄ zwischen dem ersten Abstandssensor 3 und dem zweiten Abstandssensor 4 aus dem Signal des Strahlungsdetektors 8 bestimmt werden. Dies kann bei der Bestimmung der Dicke d des Bauteils 2 berücksichtigt werden. Das kann insbesondere durch folgende Verfahrensschritte durchgeführt werden:
a) Bestimmen eines Referenzwertes für den Abstand a₄ zwischen dem ersten Abstandssensor 3 und dem zweiten Abstandssensor 4, sowie Bestimmen eines Referenzwertes für den Abstand a₃ mit einem Signal des Strahlungsdetektors 8,
b) Bestimmen eines Korrekturwertes für den Abstand a₄ zwischen dem ersten Abstandssensor 3 und dem zweiten Abstandssensor 4, indem mit einem Signal des Strahlungsdetektors 8 eine Änderung des Abstands a₃ relativ zum Referenzwert für den Abstand a₃ ermittelt wird.
c) Bestimmen eines Messergebnisses aus einem mit dem ersten Abstandssensor 3 gemessenen ersten Abstand a₁, einem mit dem zweiten Abstandssensor 4 gemessenen zweiten Abstand a₂ sowie aus dem in Schritt a) bestimmten Referenzwert und dem in Schritt b) bestimmten Korrekturwert für den Abstand a₄ zwischen dem ersten Abstandssensor 3 und dem zweiten Abstandssensor 4.

Es genügt, Schritt a) einmalig als eine Referenzierung durchzuführen. Schritt b) kann einmalig oder mehrfach durchgeführt werden, insbesondere periodisch. Schritt c) kann für eine Vielzahl von Messpunkten durchgeführt werden. Die bevorzugte Anwendungsweise ist, dass die Korrekturwerterfassung aus Schritt b) zeitgleich bzw. synchron zur Abstandswerterfassung der Abstandssensoren aus Schritt c) erfolgt.

Damit sich die Umlenkspiegel 6,7 und die Linseneinheit 9 möglichst wenig relativ zueinander bewegen, sind diese an einem Halteelement 10 aus einer Keramik gehalten. Dieses ist in dem Verbindungsteil 14 des Rahmens 11 angeordnet, so dass die Umlenkspiegel 6,7 und die Linseneinheit 9 insoweit von dem Verbindungsteil 14 gehalten sind.

Der Rahmen 11 ist über Träger 16 am Untergrund 18 gehalten. Die Träger 16 sind nur über Haltepunkte 17 am Rahmen 11 gehalten. Die Haltepunkte 17 sind mittig im Verbindungsteil 14 des Rahmens 11 angeordnet. Dadurch breiten sich Schwingungen im Rahmen 11 symmetrisch aus. Auch die thermische Ausdehnung des Rahmens 11 ist symmetrisch. Das erleichtert die Korrektur bei der Bestimmung der Dicke d des Objekts 2. Der Rahmen 11 ist in dieser Ausführungsform nach Art eines Kragarms gehalten.

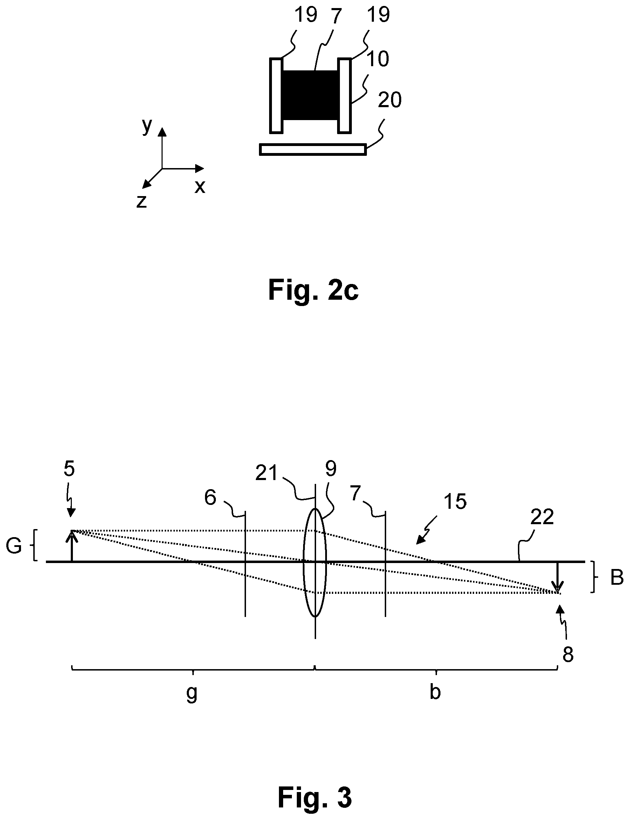

Fig. 2a zeigt das Halteelement 10 der Vorrichtung 1 aus Fig. 1 in einer vergrößerten Darstellung. Die in Fig. 2a gezeigte Perspektive ist die gleiche wie in Fig. 1. Fig. 2b zeigt das Halteelement 10 aus Fig. 2a in einer Vorderansicht. Fig. 2c zeigt das Halteelement 10 aus den Fig. 2a und 2b in einer Draufsicht. Das bedeutet, dass die Ansichten der Fig. 2a bis 2c paarweise senkrecht zueinander stehen. In Fig. 2c ist zu erkennen, dass das Halteelement 10 aus zwei Keramikplatten 19 gebildet ist. Diese sind an nur einem Punkt an einer Metallplatte 20 gehalten, überall sonst verhindert ein Luftspalt zwischen Keramikplatte und Umgebung eine Kräfteeinwirkung bzw. die Entstehung von mechanischer Spannung. Die Metallplatte 20 ist in Fig. 2c nur angedeutet und in den Fig. 2a und 2b der Übersichtlichkeit halber nicht gezeigt.

Fig. 3 zeigt den Strahlengang 15 der Vorrichtung 1 aus Fig. 1. Die Darstellung ist insbesondere insoweit schematisch, als dass der Strahlengang 15 nicht durch Umlenkspiegel 6,7 gefaltet ist und die optische Achse 22 somit vollständig auf einer Geraden liegt. Zu erkennen ist, dass die Strahlungsquelle 5 durch die Linseneinheit 9 auf den Strahlungsdetektor 8 abgebildet wird. Dazu ist die optische Hauptebene 21 der Linseneinheit 9 eingezeichnet. Die Gegenstandsweite g ist gleich der Bildweite b. Entsprechend sind auch Gegenstandsgröße G und Bildgröße B gleich groß, so dass sich ein Abbildungsmaßstab von 1:1 ergibt. Eine Verschiebung der Strahlungsquelle 5 um eine bestimmte Distanz nach oben ergibt damit eine Verschiebung des Bildes auf dem Strahlungsdetektor 8 um diese Distanz nach unten (bzw. in der gefalteten Darstellung ebenfalls nach oben).

Durch die Strahlungsquelle 5, die Umlenkspiegel 6,7 und den Strahlungsdetektor 8 kann eine Änderung des Abstands a₄ zwischen dem ersten Abstandssensor 3 und dem zweiten Abstandssensor 4 bestimmt werden. Damit kann die Messgenauigkeit gesteigert werden.

### Bezugszeichenliste

- 1: Vorrichtung
- 2: Objekt
- 3: erster Abstandssensor
- 4: zweiter Abstandssensor
- 5: Strahlungsquelle
- 6: erster Umlenkspiegel
- 7: zweiter Umlenkspiegel
- 8: Strahlungsdetektor
- 9: abbildende Optik
- 10: Halteelement
- 11: Rahmen
- 12: erster Arm
- 13: zweiter Arm
- 14: Verbindungsteil
- 15: Strahlengang
- 16: Träger
- 17: Haltepunkt
- 18: Untergrund
- 19: Keramikplatten
- 20: Aluminiumplatte
- 21: optische Hauptebene
- 22: optische Achse
- 23: erster Abschnitt
- 24: zweiter Abschnitt
- 25: dritter Abschnitt

- a₁: erster Abstand
- a₂: zweiter Abstand
- a₃: Abstand zwischen der Strahlungsquelle und dem Strahlungsdetektor
- a₄: Abstand zwischen dem ersten Abstandssensor und dem zweiten Abstandssensor
- d: Dicke

- g: Gegenstandsweite
- b: Bildweite
- G: Gegenstandsgröße
- B: Bildgröße

- x: erste Richtung
- y: zweite Richtung
- z: dritte Richtung

## Patentansprüche

1. Vorrichtung (1) zur Abstandsmessung, umfassend:
- einen ersten Abstandssensor (3) zum Messen eines ersten Abstands (a₁), welcher sich zwischen dem ersten Abstandssensor (3) und einem Objekt (2) erstreckt,
- einen zweiten Abstandssensor (4) zum Messen eines zweiten Abstands (a₂), welcher sich zwischen dem zweiten Abstandssensor (4) und dem Objekt (2) erstreckt,
- eine Strahlungsquelle (5) für elektromagnetische Strahlung,
- einen Strahlungsdetektor (8) für die elektromagnetische Strahlung,
wobei die Vorrichtung (1) derart ausgebildet ist, dass mit der Strahlungsquelle (5) und dem Strahlungsdetektor (8) eine Änderung eines Abstands (a₄) zwischen dem ersten Abstandssensor (3) und dem zweiten Abstandssensor (4) bestimmbar ist, weiterhin umfassend zwei Umlenkspiegel (6,7), wobei die Strahlungsquelle (5) und der Strahlungsdetektor (8) derart angeordnet sind, dass eine Änderung eines Abstands (a₃) zwischen der Strahlungsquelle (5) und dem Strahlungsdetektor (8) ein Maß für eine Änderung eines Abstands (a₄) zwischen dem ersten Abstandssensor (3) und dem zweiten Abstandssensor (4) ist, und wobei die Strahlungsquelle (5), die Umlenkspiegel (6,7) und der Strahlungsdetektor (8) derart ausgebildet und angeordnet sind, dass die von der Strahlungsquelle (5) ausgesendete elektromagnetische Strahlung über die Umlenkspiegel (6,7) auf den Strahlungsdetektor (8) fällt, so dass eine Änderung des Abstands (a₃) zwischen der Strahlungsquelle (5) und dem Strahlungsdetektor (8) mit einem Signal des Strahlungsdetektors (8) bestimmbar ist, **dadurch gekennzeichnet, dass** die Vorrichtung weiterhin eine abbildende Optik (9) zur Abbildung der Strahlungsquelle auf den Strahlungsdetektor aufweist, welche mindestens eine optische Hauptebene (21) hat, die zwischen den beiden Umlenkspiegeln (6,7) angeordnet ist.

2. Vorrichtung (1) nach Anspruch 1, wobei die Strahlungsquelle (5), die abbildende Optik (9) und der Strahlungsdetektor (8) derart ausgebildet und angeordnet sind, dass die Linseneinheit (9) die Strahlungsquelle (5) mit einem Abbildungsmaßstab im Bereich von 1:0,1 bis 1:10 auf den Strahlungsdetektor (8) abbildet.

3. Vorrichtung (1) nach einem der vorhergehenden Ansprüche, wobei die Umlenkspiegel (6,7) an einem Halteelement (10) gehalten sind, welches aus einem Material mit einem Längenausdehnungskoeffizienten von höchstens 4,0•10E-06 1/K bei 20°C gebildet ist.

4. Vorrichtung (1) nach einem der vorhergehenden Ansprüche, weiterhin aufweisend einen Rahmen (11) mit einem ersten Arm (12), einem zweiten Arm (13) und einem Verbindungsteil (14), wobei der erste Arm (12) über das Verbindungsteil (14) mit dem zweiten Arm (13) verbunden ist, wobei der erste Abstandssensor (3) und die Strahlungsquelle (5) von dem ersten Arm (12) gehalten sind, die Umlenkspiegel (6,7) von dem Verbindungsteil (14) gehalten sind und der zweite Abstandssensor (4) und der Strahlungsdetektor (8) von dem zweiten Arm (13) gehalten sind.

5. Vorrichtung (1) nach Anspruch 4, wobei der Rahmen (11) als ein C-Rahmen ausgebildet ist.

6. Vorrichtung (1) nach einem der vorstehenden Ansprüche, wobei der erste Abstandssensor (3) und der zweite Abstandssensor (4) derart ausgebildet und einander gegenüberliegend angeordnet sind, dass aus dem ersten Abstand (a₁) und dem zweiten Abstand (a₂) eine Dicke (d) des Objekts (2) bestimmbar ist.

7. Vorrichtung (1) nach einem der vorstehenden Ansprüche, wobei die Strahlungsquelle (5) eine Lichtquelle für inkohärentes Licht ist.

8. Verfahren zur Abstandsmessung mit einer Vorrichtung (1) nach einem der vorstehenden Ansprüche, umfassend:
a) Bestimmen eines Referenzwertes für den Abstand (a₄) zwischen dem ersten Abstandssensor (3) und dem zweiten Abstandssensor (4), sowie Bestimmen eines Referenzwertes für den Abstand (a₃) zwischen der Strahlungsquelle (5) und dem Strahlungsdetektor (8) mit einem Signal des Strahlungsdetektors (8),
b) Bestimmen eines Korrekturwertes für den Abstand (a₄) zwischen dem ersten Abstandssensor (3) und dem zweiten Abstandssensor (4), indem mit einem Signal des Strahlungsdetektors (8) eine Änderung des Abstands (a₃) zwischen der Strahlungsquelle (5) und dem Strahlungsdetektor (8) relativ zum Referenzwert für den Abstand (a₃) zwischen der Strahlungsquelle (5) und dem Strahlungsdetektor (8) ermittelt wird,
c) Bestimmen eines Messergebnisses aus einem mit dem ersten Abstandssensor (3) gemessenen ersten Abstand (a₁), einem mit dem zweiten Abstandssensor (4) gemessenen zweiten Abstand (a₂) sowie aus dem in Schritt a) bestimmten Referenzwert und dem in Schritt b) bestimmten Korrekturwert für den Abstand (a₄) zwischen dem ersten Abstandssensor (3) und dem zweiten Abstandssensor (4).

9. Verfahren nach Anspruch 8, wobei Schritt c) für eine Vielzahl von Messpunkten durchgeführt wird, und wobei Schritt b) für jeden der Messpunkte jeweils einmal zeitgleich durchgeführt wird.

10. Verfahren nach einem der Ansprüche 8 oder 9, wobei das Objekt (2) ein relativ zu der Vorrichtung (1) bewegtes Bandmaterial ist.

## Claims

1. Device (1) for measuring distances, comprising:
- a first distance sensor (3) for measuring a first distance (a₁), which extends between the first distance sensor (3) and an object (2),
- a second distance sensor (4) for measuring a second distance (a₂), which extends between the second distance sensor (4) and the object (2),
- a radiation source (5) for electromagnetic radiation,
- a radiation detector (8) for the electromagnetic radiation, wherein the device (1) is designed such that a change in a distance (a₄) between the first distance sensor (3) and the second distance sensor (4) can be determined with the radiation source (5) and the radiation detector (8), also comprising two deflection mirrors (6, 7), wherein the radiation source (5) and the radiation detector (8) are arranged in such a way that a change in a distance (a₃) between the radiation source (5) and the radiation detector (8) is a measure of a change in a distance (a₄) between the first distance sensor (3) and the second distance sensor (4), and wherein the radiation source (5), the deflection mirrors (6, 7) and the radiation detector (8) are designed and arranged in such a way that the electromagnetic radiation emitted by the radiation source (5) falls via the deflection mirrors (6, 7) onto the radiation detector (8) such that a change in the distance (a₃) between the radiation source (5) and the radiation detector (8) can be determined with a signal of the radiation detector (8), **characterized in that** the device also has an imaging optics (9) which is configured for imaging the radiation source onto the radiation detector and has at least one principal optical plane (21), which is arranged between the two deflection mirrors (6, 7).

2. Device (1) according to Claim 1, wherein the radiation source (5), the imaging optics (9) and the radiation detector (8) are designed and arranged in such a way that the lens unit (9) images the radiation source (5) onto the radiation detector (8) with an imaging scale in the range from 1:0.1 to 1:10.

3. Device (1) according to one of the preceding claims, wherein the deflection mirrors (6, 7) are held on a holding element (10), which is formed from a material with a coefficient of linear expansion of at most 4.0•10E-06 1/K at 20°C.

4. Device (1) according to one of the preceding claims, also having a frame (11) with a first arm (12), a second arm (13) and a connecting part (14), wherein the first arm (12) is connected via the connecting part (14) to the second arm (13), wherein the first distance sensor (3) and the radiation source (5) are held by the first arm (12), the deflection mirrors (6, 7) are held by the connecting part (14) and the second distance sensor (4) and the radiation detector (8) are held by the second arm (13).

5. Device (1) according to Claim 4, wherein the frame (11) is designed as a C frame.

6. Device (1) according to one of the preceding claims, wherein the first distance sensor (3) and the second distance sensor (4) are designed and arranged opposite one another in such a way that a thickness (d) of the object (2) can be determined from the first distance (a₁) and the second distance (a₂).

7. Device (1) according to one of the preceding claims, wherein the radiation source (5) is a light source for incoherent light.

8. Method for measuring distances with a device (1) according to one of the preceding claims, comprising:
a) determining a reference value for the distance (a₄) between the first distance sensor (3) and the second distance sensor (4), and determining a reference value for the distance (a₃) between the radiation source (5) and the radiation detector (8) with a signal of the radiation detector (8),
b) determining a correction value for the distance (a₄) between the first distance sensor (3) and the second distance sensor (4) by ascertaining with a signal of the radiation detector (8) a change in the distance (a₃) between the radiation source (5) and the radiation detector (8) relative to the reference value for the distance (a₃) between the radiation source (5) and the radiation detector (8),
c) determining a measurement result from a first distance (a₁), measured with the first distance sensor (3), a second distance (a₂), measured with the second distance sensor (4), and from the reference value determined in step a) and the correction value determined in step b) for the distance (a₄) between the first distance sensor (3) and the second distance sensor (4).

9. Method according to Claim 8, wherein step c) is carried out for a multiplicity of measurement points, and wherein step b) is carried out once in each case for each of the measurement points simultaneously.

10. Method according to either of Claims 8 and 9, wherein the object (2) is a strip material moved relative to the device (1).

## Revendications

1. Dispositif (1) de mesure de distance, comprenant :
- un premier capteur de distance (3) destiné à mesurer une première distance (a₁) qui s'étend entre le premier capteur de distance (3) et un objet (2),
- un deuxième capteur de distance (4) destiné à mesurer une deuxième distance (a₂) qui s'étend entre le deuxième capteur de distance (4) et l'objet (2),
- une source (5) de rayonnement électromagnétique,
- un détecteur (8) de rayonnement électromagnétique, ledit dispositif (1) étant conçu de telle manière qu'une variation d'une distance (a₄) entre le premier capteur de distance (3) et le deuxième capteur de distance (4) peut être déterminée à l'aide de la source de rayonnement (5) et du détecteur de rayonnement (8), comprenant en outre deux miroirs de déviation (6,7), la source de rayonnement (5) et le détecteur de rayonnement (8) étant agencés de telle manière qu'une variation d'une distance (a₃) entre la source de rayonnement (5) et le détecteur de rayonnement (8) soit une mesure d'une variation d'une distance (a₄) entre le premier capteur de distance (3) et le deuxième capteur de distance (4), et la source de rayonnement (5), les miroirs de déviation (6,7) et le détecteur de rayonnement (8) étant conçus et agencés de telle manière que le rayonnement électromagnétique émis par la source de rayonnement (5) soit incident sur le détecteur de rayonnement (8) par l'intermédiaire des miroirs de déviation (6,7), de sorte qu'une variation de la distance (a₃) entre la source de rayonnement (5) et le détecteur de rayonnement (8) peut être déterminée à l'aide d'un signal provenant du détecteur de rayonnement (8), **caractérisé en ce que** le dispositif comprend en outre une optique de formation d'image (9) pour former l'image de la source de rayonnement sur le détecteur de rayonnement, laquelle comporte au moins un plan principal optique (21) qui est agencé entre les deux miroirs de déviation (6,7).

2. Dispositif (1) selon la revendication 1, dans lequel la source de rayonnement (5), l'optique d'imagerie (9) et le détecteur de rayonnement (8) sont conçus et agencés de telle manière que l'unité à lentilles (9) forme l'image de la source de rayonnement (5) sur le détecteur de rayonnement (8) avec un rapport de formation d'image se situant dans la plage de 1:0,1 à 1:10.

3. Dispositif (1) selon l'une quelconque des revendications précédentes, dans lequel les miroirs de déviation (6,7) sont maintenus sur un élément de maintien (10) qui est formé d'un matériau ayant un coefficient de dilatation linéaire d'au plus 4,0•10E-06 1/K à 20 °C.

4. Dispositif (1) selon l'une quelconque des revendications précédentes, comprenant en outre un cadre (11) doté d'un premier bras (12), d'un deuxième bras (13) et d'une partie de liaison (14), le premier bras (12) étant relié au deuxième bras (13) par la partie de liaison (14), le premier capteur de distance (3) et la source de rayonnement (5) étant maintenus par le premier bras (12), les miroirs de déviation (6,7) étant maintenus par la partie de liaison (14), et le deuxième capteur de distance (4) et le détecteur de rayonnement (8) étant maintenus par le deuxième bras (13).

5. Dispositif (1) selon la revendication 4, dans lequel le cadre (11) est réalisé sous la forme d'un cadre en C.

6. Dispositif (1) selon l'une quelconque des revendications précédentes, dans lequel le premier capteur de distance (3) et le deuxième capteur de distance (4) sont réalisés et agencés en regard l'un de l'autre de telle manière qu'une épaisseur (d) de l'objet (2) puisse être déterminée à partir de la première distance (a₁) et de la deuxième distance (a₂).

7. Dispositif (1) selon l'une quelconque des revendications précédentes, dans lequel la source de rayonnement (5) est une source de lumière incohérente.

8. Procédé de mesure de distance à l'aide d'un dispositif (1) selon l'une quelconque des revendications précédentes, comprenant :
a) la détermination d'une valeur de référence pour la distance (a₄) entre le premier capteur de distance (3) et le deuxième capteur de distance (4), ainsi que la détermination d'une valeur de référence pour la distance (a₃) entre la source de rayonnement (5) et le détecteur de rayonnement (8) à l'aide d'un signal provenant du détecteur de rayonnement (8),
b) la détermination d'une valeur de correction pour la distance (a₄) entre le premier capteur de distance (3) et le deuxième capteur de distance (4) en déterminant, à l'aide d'un signal provenant du détecteur de rayonnement (8), une variation de la distance (a₃) entre la source de rayonnement (5) et le détecteur de rayonnement (8) par rapport à la valeur de référence pour la distance (a₃) entre la source de rayonnement (5) et le détecteur de rayonnement (8),
c) la détermination d'un résultat de mesure à partir d'une première distance (a₁) mesurée à l'aide du premier capteur de distance (3), d'une deuxième distance (a₂) mesurée à l'aide du deuxième capteur de distance (4), ainsi qu'à partir de la valeur de référence déterminée à l'étape a) et de la valeur de correction déterminée à l'étape b) pour la distance (a₄) entre le premier capteur de distance (3) et le deuxième capteur de distance (4).

9. Procédé selon la revendication 8, dans lequel l'étape c) est effectuée pour une pluralité de points de mesure, et dans lequel l'étape b) est respectivement effectuée une seule fois simultanément pour chacun des points de mesure.

10. Procédé selon l'une des revendications 8 ou 9, dans lequel l'objet (2) est un matériau en bande déplacé par rapport au dispositif (1).
